# EUROPÄISCHE PATENTSCHRIFT

(11) **EP 0 993 766 B1**
(45) Veröffentlichungstag und Bekanntmachung des Hinweises auf die Patenterteilung: **17.09.2003**
(21) Anmeldenummer: 99120318.3
(22) Anmeldetag: 12.10.1999
(51) Int. Cl.: A01F 29/10, A01D 69/00

(54) **Steuerung für Vorsatzgerät**
Control for an accesory
Contrôle pour un accessoire

(30) Priorität: 16.10.1998 DE 19847891
(43) Veröffentlichungstag der Anmeldung: 19.04.2000
(73) Patentinhaber: CLAAS Saulgau GmbH, 88340 Bad Saulgau (DE)
(72) Erfinder: Gernert, Siegfried, 88339 Bad Waldsee (DE); Gebele, Josef, 88374 Hosskirch-OT Hüttenreuthe (DE)

(56) Entgegenhaltungen:
- EP-A- 0 139 264
- EP-A- 0 403 899

## Beschreibung

Die Erfindung betrifft eine Steuerung für Vorsatzgeräte gemäß dem Oberbegriff des Patentanspruch 1. Eine solche Steuerung ist aus dem Dokument EP-A0139264 bekannt.
Die Arbeitsorgane derartiger Vorsatzgeräte sind in Abhängigkeit davon, ob das Vorsatzgerät die Funktion des Aufsammelns bereits geschnittenen und in Schwaden abgelegten Erntegutes oder des Mähens zu erfüllen hat, als Aufnahmetrommeln oder Mähwerke mit oszillierend oder rotierend angetriebenen Mähorganen ausgeführt. Da deren Arbeitsbreite im allgemeinen größer ist als die Breite der Einzugsorgane an den, die Vorsatzgeräte aufnehmenden Trägerfahrzeugen, die je nach erforderlicher Bearbeitung des Erntegutes Häcksler oder Mähdrescher sein können, sind den Arbeitsorganen Querfördereinrichtungen nachgeordnet, die das Erntegut im wesentlichen mittig im Vorsatzgerät zusammenführen und dem Einzugsbereich der Trägerfahrzeuge übergeben, wobei die Querförderorgane durch geeignete Mitnahmelemente in der Regel auch den Höhenunterschied zwischen der Ebene der Arbeitsorgane und dem Einzugsbereich der Trägerfahrzeuge überbrükken.
Wird den Arbeitsorganen der Träerfahrzeuge durch die an ihnen adaptierten Vorsatzgeräte eine sehr große Menge oder extrem feuchtes Erntegut zugeführt, kann es zu Überlastungserscheinungen kommen, die dazu führen, daß die Arbeitsorgane der Trägerfahrzeuge anhalten und über Reversiereinrichtungen ihre Drehrichtung geändert werden kann, wodurch das Verstopfungen verursachende Erntegut wieder aus dem Einzugsbereich des Trägerfahrzeugs herausgefördert wird. Andererseits sind die Einzugsorgane der Trägerfahrzeuge in der Regel mit Metalldetektoren ausgestattet, die bei Erkennung von metallischen Gegenständen ein Abschalten der Arbeitsorgane auslösen und über die bereits angesprochenen Reversiereinrichtungen ein Auswerfen der fremdkörperdurchsetzten Gutmenge aus dem Einzugsbereich der Trägerfahrzeuge erfolgt.
Durch den Reversiervorgang wird das im Einzugs-, Dresch- oder Häckselbereich des Trägerfahrzeugs befindliche Erntegut durch die Einschuböffnung des Einzugsbereichs in das Vorsatzgerät zurückgefördert. Um Verstopfungen im Vorsatzgerät zu vermeiden sind die im allgemeinen als Querförderschnecken ausgeführten Querförderorgane mit der Reversiereinrichtung gekoppelt, so daß das ausgeworfene Erntegut durch das Querförderorgan vor die Arbeitsorgane zum nochmaligen Einzug geworfen wird. Die Lage des Querförderorgans vor der Einschuböffnung des Trägerfahrzeugs und der einen hohen Reibwiderstand verursachende Transport des ausgeworfenen Erntegutes zwischen den Schneckengängen der Querförderschnecke und dem sie untenseitig umgebenden Trog rufen beim Einschalten der Reversiereinrichtung verschleißfördernde hohe Anlaufmomente an den energieübertragenden Organen der Reversiereinichtung hervor. Um diese Anlaufinomente zu reduzieren, offenbart die DE 40 21 030 C2 ein als Getreideschneidwerk ausgeführtes Vorsatzgerät, dessen Querförderschnecke über Verstellmittel in ihrer Lage zu den Mähorganen und zur Einschuböffnung des Trägerfahrzeugs in und vertikal zur Fahrtrichtung veränderbar angeordnet ist, wobei die Lageänderung des Querförderorgans vom Fahrersitz aus vorgenommen werden kann. Aus dem Stand der Technik ist es außerdem bekannt, derartige Querförderorgane direkt mit der Reversiereinrichtung des Trägerfahrzeugs zu koppeln, so daß die Arbeitsorgane des Trägerfahrzeugs und das Querförderorgan des Vorsatzgerätes gleichzeitig eine Drehrichtungsumkehr erfahren, so daß einem eventuellen Zeitversatz der Drehrichtungsumkehr geschuldete neue Verstopfungen vermieden werden. Ein wesentlicher Nachteil ergibt sich bei derartig ausgeführten Vorsatzgeräten und ihrem Zusammenwirken mit der Reversiereinrichtung des Trägerfahrzeugs dadurch, daß der Trägerfahrzeugführer aufeinanderfolgend zuerst das Querförderorgan aus dem Bereich der Einschuböffnung des Trägerfahrzeugs bewegen muß, bevor er die Reversiereinrichtung betätigt, damit das oben beschriebene Anlaufmoment niedrig bleibt. Damit wird dem Trägerfahrzeugführer bei jeder Detektierung von Fremdkörpern im Gutstrom oder bei auftretenden Verstopfungen ein hohes Maß an Konzentration abgefordert, die Funktionen Verschwenken des Querförderorgans und Zuschalten der Reversiereinrichtung in der richtigen Reihenfolge auszulösen.

Der Erfindung liegt deshalb die Aufgabe zugrunde, eine Steuerung für Vorsatzgeräte gemäß dem Oberbegriff des Anspruchs 1 so zu gestalten, daß das Verschwenken des Querförderorgans des Vorsatzgerätes und die Zuschaltung der Reversiereinrichtung des Trägerfahrzeugs in der erforderlichen Reihenfolge nach Auslösung eines einzigen Steuersignals selbsttätig vorgenommen wird. Erfindungsgemäß wird die Aufgabe durch eine Steuerung für Vorsatzgeräte mit den kennzeichnenden Merkmalen des Anspruchs 1 gelöst.

Durch die Koppelung der Verstelleinrichtung des Querförderorgans mit der Reversiereinrichtung des Trägerfahrzeugs kann auf konstruktiv einfache Weise erreicht werden, daß die Auslösung eines einzigen Startsignals in einem dafür auf dem Trägerfahrzeug vorgesehenen Steuergerät selbstätig die Verstellung des Querförderorgans bewirkt und zeitversetzt dazu das Reversiergetriebe zuschaltet. Aufgrund dessen, daß der Reversiervorgang erst einsetzt, wenn das Querförderorgan aus dem Bereich der Eizugswalzen herausgeschwenkt ist, kann das zwischen den Einzugswalzen befindliche Erntegut gegen einen geringeren Widerstand aus den Einzugswalzen herausgefördert werden, so daß der belastungsabhängige Verschleiß des Reversierantriebs deutlich reduziert werden kann. Außerdem verringert sich die Überwachungs- und Steuerfunktion des Trägerfahrzeugführers.

In einer vorteilhaften Weiterbildung der Erfindung ist vorgesehen, daß das am Steuergerät des Trägerfahrzeugs ausgelöste Startsignal im einfachsten Fall elektrisch oder hydraulisch auf die das Querförderorgan und die Reversiereinrichtung verbindende Steuereinheit übertragen wird, so daß die am Trägerfahrzeug bereits vorhandenen Leitungssysteme in einfacher Weise zur Signalübertragung genutzt werden können.

Während das zur Höhenverstellung des Querförderorgans notwendige Ausgangssignal Y1 der Steuereinheit im einfachsten Fall hydraulisch über Hubzylinder erzeugt wird, kann das Ausgangssignal Y2 zur Einschaltung der Reversiereinrichtung auf konstruktiv einfache und zuverlässig arbeitende Weise durch hydraulische oder mechanische Koppelung der Verstelleinrichtung des Querförderorgans mit der Reversiereinrichtung unter Verwendung geeigneter, an sich bekannter Bauelemente erzeugt werden.

Vorteilhafte Ausgestaltungen sind Gegenstand weiterer Unteransprüche und werden nachfolgend anhand in Zeichnungen dargestellter Ausführungsbeispiele näher erläutert.

Es zeigen
- Figur 1: eine schematische Darstellung einer hydraulischen Koppelung zwischen der Verstelleinrichtung des Querförderorgans einer Aufsammeleinrichtung und der Reversiereinrichtung eines Häckslers
- Figur 2: eine schematische Darstellung einer mechanischen Koppelung zwischen der Verstelleinrichtung des Querförderorgans eines Erntevorsatzes und der Reversiereinrichtung eines Häckslers

Den im Einzugsgehäuse (1) eines Feldhäckslers angeordneten Einzugswalzen (2, 3) ist ein als Querförderschnecke (4) ausgebildetes Querförderorgan des am Einzugsgehäuse (1) des Feldhäckslers adaptierten landwirtschaftlichen Vorsatzgerätes (5, 6) vorgeordnet, wobei die Querförderschnecke (4) in an sich bekannter und deshalb nicht dargestellter Weise antriebsseitig mit den Einzugswalzen (2, 3) gekoppelt sein kann. Je nach Aufgabe und Funktion des landwirtschaftlichen Vorsatzgerätes (5, 6) kann dies eine erntegutaufnehmende und weiterleitende Aufsammeleinrichtung (5) oder ein erntegutmähender und weiterleitender Erntevorsatz (6) sein.

Die Querförderschnecke (4) der Aufsammeleinrichtung (5) ist ein- oder beidseitig an einem Tragrahmen (7) gelagert, der an seinem in Fahrtrichtung FR vorn liegenden Ende durch wenigstens eine drehbar angeordnete Walze (8) als Niederhalter (9) ausgeführt ist und der in seinem rückwärtigen Bereich um eine quer zur Fahrtrichtung FR angeordneten Achse (10) schwenkbar am schematisch dargestellten Rahmen (11) der Aufsammeleinrichtung (5) angeordnet ist. Unterhalb des die Querförderschnecke (4) und die Walze (8) aufnehmenden Tragrahmens (7) ist eine Aufsammeltrommel (12) angeordnet, die auf dem Boden liegendes, bereits geerntetes Gut aufnimmt und an die Querförderschnecke (4) übergibt, die es dann mit reduzierter Breite den Einzugswalzen (2, 3) zuführt.
Der Tragrahmen (7) verfügt in seinem rückwärtigen untenseitigen Bereich über wenigstens einen Anlenkflansch (13) an dem die Kolbenstange (14) eines ebenfalls am Rahmen (11) der Aufsammeleinrichtung (5) drehbar angelenkten Hubzylinders (15) angreift, wobei durch Aus- und Einfahren der Kolbenstange (14) ein Ausheben oder Absenken der Querförderschnecke (4) ermöglicht wird. Standardmäßig verfügen Häcksler über wenigstens eine Steuereinrichtung (16) und eine als hydraulische Pumpe (17) ausgeführte Druckquelle, die über elektrische oder hydraulische Leitungssysteme (18, 19) mit der erfindungsgemäßen Steuereinheit (20, 21) verbunden sind.

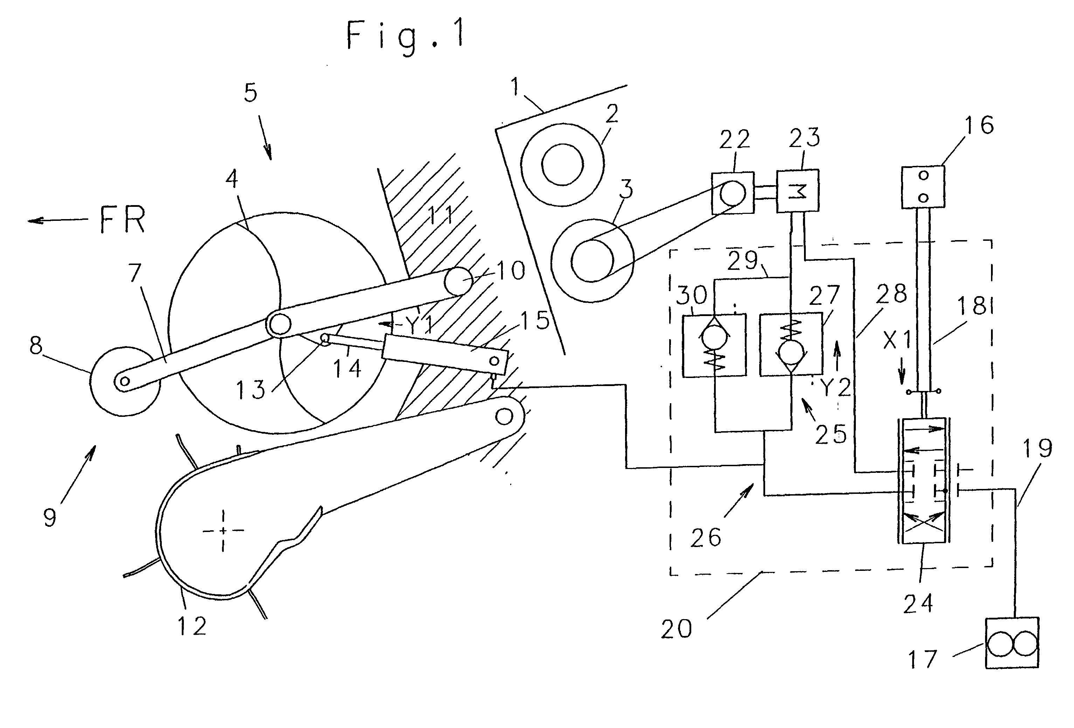

Unter der Voraussetzung, daß das Reversiergetriebe (22) der Einzugswalzen (2, 3) über einen Hydromotor (23) angesteuert wird, kann die erfindungsgemäße Steuereinheit (20) entsprechend Figur 1 über ein elektrisch schaltbares Wegeventil (24) und eine Rückschlagventil-Kombination (25) verfügen. Der Hubzylinder (15) und der Hydromotor (23) des Reversiergetriebes (22) sind über die erfindungsgemäße Steuereinheit (20) in der Weise miteinander gekoppelt, daß ein von der Steuereinrichtung (16) erzeugtes Eingangssignal X1 zu einer Verstellung des Wegeventils (24) führt, bei der Leitungssystem (26) druckbeaufschlagt wird. Dies führt zu einem Ausfahren der Kolbenstange 14 (Ausgangssignal Y1), wobei die Querförderschnecke (4) um Achse (10) in ihre nicht näher dargestellte oberste Position verschwenkt und bei weiterem Druckanstieg im Leitungsystem (26) nachfolgend das Druckbegrenzungsventil (27) öffnet (Ausgangssignal Y2) und das Reversiergetriebe (22) über Hydomotor (23) den Reversiervorgang der Einzugswalzen (2, 3) auslöst. Über Leitungssystem (28) wird dabei das drucklose energieübertragende Medium zurückgeführt. Umgekehrt kann Eingangssignal X1 eine Verstellung des Wegeventils (24) bewirken, in der Leitungssystem (26) drucklos ist, wobei die Querfördreschnecke massebedingt um Achse (10) in ihre untere Position zurückschwenkt und Leitungssystem (28) druckbeaufschlagt wird, so daß Hydromotor (23) die Drehrichtung des Reversiergetriebes (22) und damit die Drehrichtung der Einzugswalzen (2, 3) zum Einziehen von Erntegut umkehrt. Über die Leitungssysteme (28, 29) und Rückschlagventil (30) wird dann das energieübertragende Medium zurückgeführt. In vorteilhafter Weise verfügt Wegeventil (24) über eine weitere Schaltstellung, in der der Rücklauf des energieübertragenden Mediums aus den Leitungssystemen (26) und (28) gesperrt wird, so daß die Querförderschnecke in jeder beliebigen Stellung zwischen unterer und oberer Position angehalten werden kann, wobei die Einzugswalzen (2, 3) abgeschaltet sind. Auf diese Weise ist ein gefahrloser manueller Eingriff in die Arbeitsorgane (4, 8, 12) des Vorsatzgerätes (5) möglich. Es liegt außerdem im Rahmen der Erfindung die Rückschlagventil-Kombination (25) entfallen zu lassen, wenn konstruktiv sichergestellt ist, daß die zum Ausheben der Querförderschnecke erforderliche Kraft geringer ist als die zur Überwindung des Anlaufmoments des Hydromotors (23), des Reversiergetriebes (22) und der Einzugswalzen (2, 3) notwendige Kraft, so daß ebenfalls stets die Querförderschnecke in ihre obere Position gelangt bevor der Reversiervorgang ausgelöst wird.

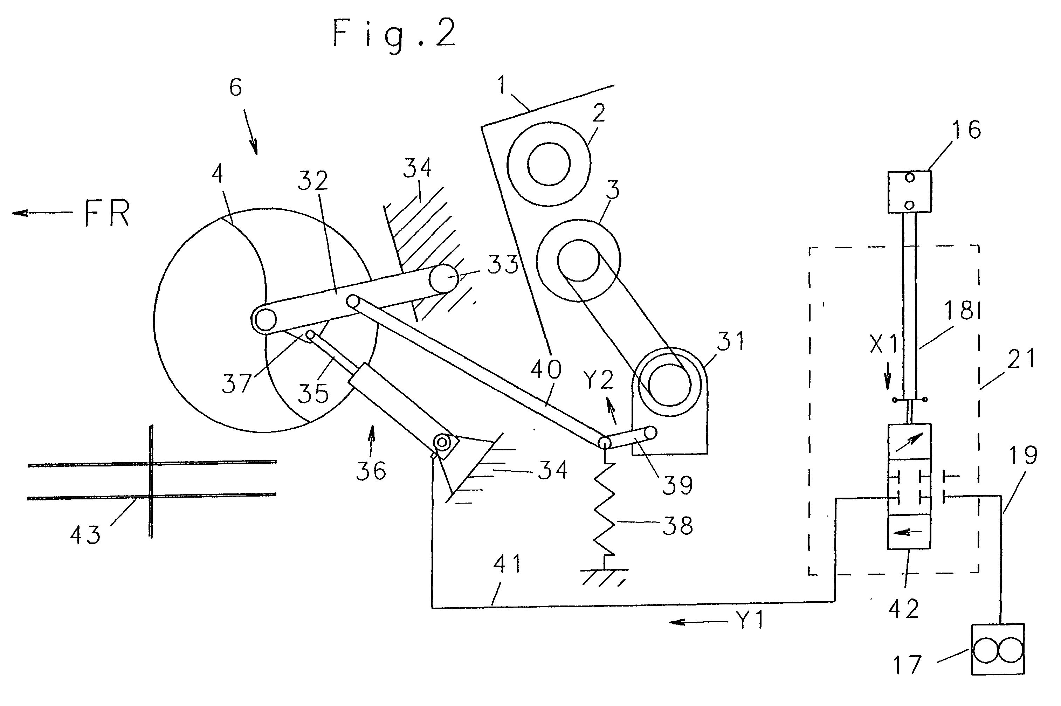

Am Beispiel eines erntegutmähende Arbeitsorgane (43) aufweisenden Erntevorsatzes (6) ist entsprechend Figur 2 eine weitere erfindungsgemäße Steuereinrichtung (21) offenbart, in der eine mechanische Koppelung zwischen der Querförderschnecke (4) des Erntevorsatzes (6) und dem Reversiergetriebe (31) des nicht näher dargestellten Häckslers vorliegt.
Die Querförderschnecke (4) des Vorsatzgerätes (6) ist ebenfalls ein- oder beidseitig an einem Tragrahmen (32) gelagert, der einenends um Achse (33) verschwenkbar am schematisch dargestellten Gestell (34) des Vorsatzgerätes (6) angeordnet ist. Untenseitig verfügt Tragrahmen (32) über wenigstens einen, die Kolbenstange (35) des Hubzylinders (36) aufnehmenden Anlenkflansch (37). Der Hubzylinder seinerseits ist kolbenseitig drehbar am Gestell (34) des Erntevorsatzes (6) angeordnet.
Die Einzugswalzen (2, 3) sind mit einem Reversiergetriebe (31) gekoppelt, welches über einen, gegen die Kraft einer Feder (38) verstellbaren, außenseitig angeordneten Schalthebel (39) verfügt, der über eine Koppel (40) mit dem Tragrahmen (32) der Querförderschnecke (4) verbunden ist. Der als einfachwirkender Zylinder ausgeführte Hubzylinder (36) ist über ein Leitungssystem (41) mit der erfindungsgemäßen Steuereinheit (21) verbunden, wobei die Steuereinheit (21) von einem Wegeventil (42) gebildet wird, daß über das bereits beschriebene elektrische und hydraulische Leitungssystem (18, 19) mit der Steuereinrichtung (16) und der hydraulischen Pumpe (17) des Häckslers verbunden ist. Ein durch Steuereinrichtung (16) erzeugtes Eingangssignal X1 führt zu einer Verstellung des Wegeventils (42), in dessen Folge Leitungssystem (41) druckbeaufschlagt wird (Ausgangssignal Y1) und die Kolbenstange (35) aus Hubzylinder (36) ausfährt, so daß die Querförderschnecke (4) in ihre obere, ebenfalls nicht dargestellte Position um Achse (33) verschwenkt wird. Dabei folgt die Koppel (40) der Bewegung der Querförderschnecke (4) und nimmt gleichzeitig gegen die Wirkung der Feder (38) den Schalthebel (39) mit. Die Länge der Koppel (40) und die des Schalthebels (39) sind so aufeinander abgestimmt, daß in der oberen Position der Querförderschnecke (4) ein Schaltvorgang (Ausgangssignal Y2) am Reversiergetriebe (31) ausgelöst wird, so daß ein Reversieren der Einzugswalzen (2, 3) erfindungsgemäß erst dann eintritt, wenn die Querförderschnecke (4) ihre obere Position bereits erreicht hat. In analoger Weise kann Eingangssignal X1 zu einer Stellung des Wegeventils (42) führen, in der das Leitungssystem (41) drucklos ist, wodurch die Querförderschnecke (4) massebedingt die Kolbenstange (35) in den Hubzylinder (36) schieb. Die Querförderschnecke (4) wird dabei um Achse (33) wieder in ihre untere Position verschwenkt. Zu Beginn dieser Abwärtsbewegung wird über die Koppel (40) und den mit ihr verbundenen Schalthebel (39) das Reversiergetriebe (31) abgeschaltet und der Reversiervorgang der Einzugswalzen (2, 3) beendet. In vorteilhafter Weise besitzt Wegeventil (42) ebenfalls eine Schaltstellung, in der der Rücklauf des energieübertragenden Mediums in Leitungssystem (41) gesperrt ist, so daß auch hier in jeder beliebigen Stellung die Bewegung der Querförderschnecke (4) bei zuvor abgeschalteten Reversiergetriebe (31) für einen gefahrlosen manuellen Eingriff in den Erntevorsatz (6) gestoppt werden kann.
Die Beschreibung der hydraulischen Koppelung anhand einer Aufsammeleinrichtung (5) und die Beschreibung der mechanischen Koppelung anhand eines Erntevorsatzes (6) ist nur beispielhaft gewählt. Gleichwohl kann eine hydraulische oder mechanische Koppelung zwischen dem Querförderorgan (4) des Vorsatzgerätes (5, 6) und der Reversiereinrichtung (22, 23, 31) des Trägerfahrzeugs in umgekehrter Weise als beschrieben, erfolgen.

Es liegt im Rahmen der Erfindung, daß die offenbarten, als Querförderschnecken (4) ausgeführten Querförderorgane auch durch andere, einen Quertransport ermöglichende Förderorgane, wie beispielsweise aus dem Stand der Technik bekannte, um vertikale Achsen umlaufende Zugmitteloder Trommelkombinationen ersetzt sein können.
Zudem kann der beschriebene, Einzugswalzen (2, 3) aufweisende Häcksler auch durch andere, im Adaptierbereich des Vorsatzgerätes (5, 6) Einzugsorgane aufweisende Trägerfahrzeuge, wie beispielsweise Mähdrescher ersetzt sein.

### Bezugszeichenliste

- 1: Einzugsgehäuse
- 2: Einzugswalze
- 3: Einzugswalze
- 4: Querförderschnecke
- 5: Aufsammeleinrichtung
- 6: Erntevorsatz
- 7: Tragrahmen
- 8: Walze
- 9: Niederhalter
- 10: Achse
- 11: Rahmen
- 12: Aufsammeltrommel
- 13: Anlenkflansch
- 14: Kolbenstange
- 15: Hubzylinder
- 16: Steuereinrichtung
- 17: hydraulische Pumpe
- 18: elektrisches Leitungssystem
- 19: hydraulisches Leitungssystem
- 20: Steuereinheit
- 21: Steuereinheit
- 22: Reversiergetriebe
- 23: Hydomotor
- 24: Wegeventil
- 25: Rückschlagventil-Kombinatiom
- 26: Leitungssystem
- 27: Druckbegrenzungsventil
- 28: Leitungssystem
- 29: Leitungssystem
- 30: Rückschlagventil
- 31: Reversiergetriebe
- 32: Tragrahmen
- 33: Achse
- 34: Gestell
- 35: Kolbenstange
- 36: Hubzylinder
- 37: Anlenkflansch
- 38: Feder
- 39: Schalthebel
- 40: Koppel
- 41: Leitungssystem
- 42: Wegeventil
- 43: Arbeitsorgane

- FR: Fahrtrichtung
- X1: Eingangssignal
- Y1: Ausgangssignal
- Y2: Ausgangssignal

## Patentansprüche

1. Steuerung für landwirtschaftliches Vorsatzgerät, das über erntegutannehmende und weiterleitende Arbeitsorgane (12) oder über erntegutmähende Arbeitsorgane (43) verfügt, denen in ihrem rückwärtigen Bereich Querförderorgane (4) zugeordnet sind, die in ihrer Lage zu den Arbeitsorganen (12, 43) und einem das landwirtschaftliche Vorsatzgerät (5, 6) aufnehmenden, über wenigstens eine Einrichtung (16) zur Steuerung dieses landwirtschaftlichen Vorsatzgerätes (5, 6) verfügenden Trägerfahrzeug mittels Verstelleinrichtung (15, 36) zwischen einer unteren und oberen Stellung veränderbar sind und die Arbeitsorgane (2, 3) des Trägerfahrzeugs über wenigstens eine hydraulisch oder mechanisch schaltbare Reversiereinrichtung (22, 23, 31) verfügen,
**dadurch gekennzeichnet,**
**daß** die Reversiereinrichtung (22, 23, 31) des Trägerfahrzeugs über eine Steuereinheit (20, 21) mit der Verstelleinrichtung (15, 36) des Querförderorgans (4) des landwirtschaftlichen Vorsatzgerätes (5, 6) in der Weise gekoppelt ist, daß ein an der Steuereinheit (20, 21) anliegendes Eingangssignal X1 ein erstes Ausgangssignal Y1 zur Betätigung der Verstelleinrichtung (15, 36) des Querförderorgans (4) und zeitversetzt dazu ein zweites Ausgangssignal Y2 zur Betätigung der Reversiereinrichtung (22, 23, 31) auslöst.

2. Steuerung für landwirtschaftliches Vorsatzgerät nach Anspruch 1,
**dadurch gekennzeichnet,**
**daß** das Eingangssignal X1 durch an sich bekannte Schaltelemente (16) des Trägerfahrzeugs erzeugt und hydraulisch oder elektrisch auf die Steuereinheit (20, 21) übertragen wird.

3. Steuerung für landwirtschaftliches Vorsatzgerät nach einem oder mehreren der vorhergehenden Ansprüche,
**dadurch gekennzeichnet,**
**daß** die Steuereinheit (20) durch wenigstens ein das Ausgangssignal Y1 erzeugendes Wegeventil (24) und eine zwischen der Verstelleinrichtung (15) des Querförderorgans (4) und der hydraulisch schaltbaren Reversiereinrichtung (22, 23) angeordnete, das Ausgangssignal Y2 erzeugende Rückschlagventil-Kombination (25) gebildet wird.

4. Steuerung für landwirtschaftliches Vorsatzgerät nach Anspruch 3,
**dadurch gekennzeichnet,**
**daß** das von der Verstelleinrichtung (15) zur Reversiereinrichtung (22, 23) öffnende Rückschlagventil (27) der Rückschlagventil-Kombination (25) durch Öffnen Ausgangssignal Y2 erst dann erzeugt, wenn die Verstelleinrichtung (15) des Querförderorgans (4) ihre obere Stellung erreicht hat.

5. Steuerung für landwirtschaftliches Vorsatzgerät nach einem oder mehreren der Ansprüchel und 2,
**dadurch gekennzeichnet,**
**daß** die Steuereinheit (21) durch wenigstens ein das Ausgangssignal Y1 erzeugendes Wegeventil (42) und eine zwischen der Verstelleinrichtung (36) des Querförderorgans (4) und der mechanisch schaltbaren Reversiereinrichtung (31) angeordnete das Ausgangssignal Y2 erzeugende Koppeleinrichtung (38, 39 40) gebildet wird.

6. Steuerung für landwirtschaftliches Vorsatzgerät nach Anspruch 5,
**dadurch gekennzeichnet,**
**daß** die Koppeleinrichtung (38, 39, 40) zwischen der Verstelleinrichtung (36) und der Reversiereinrichtung (31) so mit einem Schaltelement (39) der Reversiereinrichtung (31) in Wirkverbindung steht, daß das Ausgangssignal Y2 erst dann erzeugt wird, wenn die Verstelleinrichtung (36) des Querförderorgans (4) ihre obere Stellung erreicht hat.

7. Steuerung für landwirtschaftliches Vorsatzgerät nach einem oder mehreren der vorhergehenden Ansprüche,
**dadurch gekennzeichnet,**
**daß** die Verstelleinrichtung (15, 36) durch Hubzylinder gebildet wird.

## Claims

1. A control for a front-mounted agricultural implement which has working members (12) for receiving and passing along crop material or working members (43) for cutting crop material, associated with which in the rearward region thereof are transverse conveyor members (4) which are variable in their position relative to the working members (12, 43) and a carrier vehicle which receives the front-mounted agricultural implement (5, 6) and has at least one device (16) for controlling said front-mounted agricultural implement (5, 6), by means of an adjusting device (15, 36) between a lower and an upper position and the working members (2, 3) of the carrier vehicle have at least one hydraulically or mechanically switchable reversing device (22, 23,31),
**characterised in that**
the reversing device (22, 23, 31) of the carrier vehicle is coupled by way of a control unit (20, 21) to the adjusting device (15, 36) of the transverse conveyor member (4) of the front-mounted agricultural implement (5, 6) in such a way that an input signal X1 at the control unit (20, 21) triggers a first output signal Y1 for actuation of the adjusting device (15, 36) of the transverse conveyor member (4) and in time-displaced relationship therewith a second output signal Y2 for actuation of the reversing device (22, 23, 31).

2. A control for a front-mounted agricultural implement according to claim 1 **characterised in that** the input signal X1 is produced by per se known switching elements (16) of the carrier vehicle and hydraulically or electrically transmitted to the control unit (20, 21).

3. A control for a front-mounted agricultural implement according to one or more of the preceding claims **characterised in that** the control unit (20) is formed by at least one directional control valve (24) producing the output signal Y1 and a check valve combination (25) which is arranged between the adjusting device (15) of the transverse conveyor member (4) and the hydraulically switchable reversing device (22, 23) and which produces the output signal Y2.

4. A control for a front-mounted agricultural implement according to claim 3 **characterised in that** the check valve (27) of the check valve combination (25), which opens from the adjusting device (15) to the reversing device (22, 23), by opening produces the output signal Y2 only when the adjusting device (15) of the transverse conveyor member (4) has reached its upper position.

5. A control for a front-mounted agricultural implement according to one or more of claims 1 and 2 **characterised in that** the control unit (21) is formed by at least one directional control valve (42) producing the output signal Y1 and a coupling device (38, 39, 40) which is arranged between the adjusting device (36) of the transverse conveyor member (4) and the mechanically switchable reversing device (31) and which produces the output signal Y2.

6. A control for a front-mounted agricultural implement according to claim 5 **characterised in that** the coupling device (38, 39, 40) between the adjusting device (36) and the reversing device (31) is operatively connected to a switching element (39) of the reversing device (31) in such a way that the output signal Y2 is produced only when the adjusting device (36) of the transverse conveyor member (4) has reached its upper position.

7. A control for a front-mounted agricultural implement according to one or more of the preceding claims **characterised in that** the adjusting device (15, 36) is formed by stroke cylinders.

## Revendications

1. Commande pour un outil frontal agricole qui dispose d'organes de travail (12) ramassage et de transfert de produit récolté ou d'organes de travail (43) de moissonnage, auxquels sont associés dans leur zone postérieure des organes de transport transversaux (4), dont la position par rapport aux organes de travail (12, 43) et à un véhicule porteur recevant ledit outil frontal agricole (5, 6) et équipé d'au moins un dispositif (16) pour la commande dudit outil frontal agricole (5, 6), peut être réglée entre une position inférieure et une position supérieure,à l'aide d'un dispositif de réglage (15, 36), les organes de travail (2, 3) du véhicule porteur étant pourvus d'au moins un dispositif d'inversion (22, 23, 31) commandé par voie hydraulique ou mécanique,
**caractérisée en ce que**
le dispositif d'inversion (22, 23, 31) du véhicule porteur est couplé par l'intermédiaire d'une unité de commande (20, 21) au dispositif de réglage (15, 36) de l'organe de transport transversal (4) de l'outil frontal agricole (5, 6), d'une manière telle qu'un signal d'entrée X1 appliqué à l'unité de commande (20, 21) déclenche un premier signal de sortie Y1 pour l'actionnement du dispositif de réglage (15, 36) de l'organe de transport transversal (4) et, avec un décalage dans le temps par rapport à celui-ci, un second signal de sortie Y2 pour l'actionnement du dispositif d'inversion (22, 23, 31).

2. Commande pour un outil frontal agricole selon la revendication 1, **caractérisée en ce que** le signal d'entrée X1 est produit par des éléments de commutation (16) connus en soi du véhicule porteur et est transmis à l'unité de commande (20, 21) par voie hydraulique ou électrique.

3. Commande pour un outil frontal agricole selon une ou plusieurs des revendications précédentes, **caractérisée en ce que** l'unité de commande (20) est formée d'au moins un distributeur (24), qui produit le signal. de sortie Y1, et d'une combinaison de soupapes anti-retour (25), qui produit le signal de sortie Y2 et est placée entre le dispositif de réglage (15) de l'organe de transport transversal (4) et le dispositif d'inversion (22, 23) à commande hydraulique.

4. Commande pour un outil frontal agricole selon la revendication 3, **caractérisée en ce que** la soupape anti-retour (27) qui est passante dans le sens dispositif de réglage (15) - dispositif d'inversion (22, 23) de la combinaison de soupapes anti-retour, en s'ouvrant, produit le signal de sortie Y2 seulement si le dispositif de réglage (15) de l'organe de transport transversal (4) a atteint sa position supérieure.

5. Commande pour un outil frontal agricole selon une ou plusieurs des revendications 1 et 2, **caractérisée en ce que** l'unité de commande (21) est formée d'au moins un distributeur (42), qui produit le signal de sortie Y1, et d'un dispositif de couplage (38. 39, 40), qui produit le signal de sortie Y2 et est placé entre le dispositif de réglage (36) de l'organe de transport transversal (4) et le dispositif d'inversion (31) à commande mécanique.

6. Commande pour un outil frontal agricole selon la revendication 5, **caractérisée en ce que** le dispositif de couplage (38, 39, 40) entre le dispositif de réglage (36) et le dispositif d'inversion (31) coopère avec un élément commutateur (39) du dispositif d'inversion (31) d'une manière telle, que le signal de sortie Y2 est produit seulement si le dispositif de réglage (36) de l'organe de transport transversal (4) a atteint sa position supérieure.

7. Commande pour un outil frontal agricole selon une ou plusieurs des revendications précédentes, **caractérisée en ce que** le dispositif de réglage (15, 36) est formé de vérins,
